# EUROPEAN PATENT APPLICATION

(11) **EP 1 983 238 A1**
(43) Date of publication of application: **22.10.2008**
(21) Application number: 08004999.2
(22) Date of filing: 18.03.2008
(51) Int. Cl.: F16J 15/32

(54) **Sealing apparatus**

(30) Priority: 20.04.2007 JP 2007111632
(71) Applicant: Firma Carl Freudenberg, 69469 Weinheim (DE)
(72) Inventor: Nakagawa, Takehiro, Fukushima-shi Fukushima 960-1193 (JP)

(57) **Abstract**

The invention provides a sealing apparatus (1) which does not generate an inversion of a dust lip (14) due to an interference with a rotating body (31), even if the rotating body (31) such as a rotating shaft, a sleeve or the like is inserted from the dust lip (14) side. The sealing apparatus is provided with a base portion (12) closely fitted and fixed to an inner peripheral surface of a housing, a main lip (13) extending to an inboard (A) side from an inner periphery thereof and slidably brought into close contact with an outer peripheral surface of a rotating body (31) inserted to the housing, and a dust lip (14) positioned in an outboard side of the main lip (13) and provided in an inner periphery of the base portion (12), and a leading end (14a) of the dust lip (14) extends in a direction opposing approximately vertically to an outer peripheral surface of the rotating body (31) or toward the inboard (A) side therefrom.

## Description

### BACKGROUND OF THE INVENTION

### Field of the Invention

The present invention relates to a sealing apparatus sealing an outer periphery of a rotating portion of a device, and more particularly to a sealing apparatus having a dust lip for preventing a dust from making an intrusion from an outboard side.

### Description of the Related Art

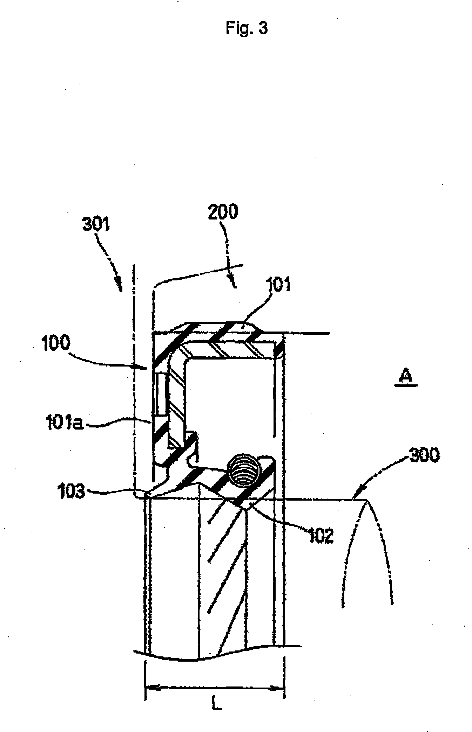

Fig. 3 is a one side cross sectional view showing a conventional sealing apparatus. In other words, a sealing apparatus 100 is provided with a base portion 101 corresponding to an oil seal sealing between a torque converter case and a torque converter in an automatic transmission of a vehicle, and closely fitted and fixed to an inner peripheral surface of a shaft hole portion of a torque converter case 200 which is not rotated, a main lip 102 extending to an inboard side A from an inner periphery of the base portion and closely contacted with an outer peripheral surface of a sleeve 300 inserted to the shaft hole, and a dust lip 103 positioned in an outboard side of the main lip 102 and provided in an inner periphery of the base portion 101, The sealing apparatus 100 seals an oil or the like in the inboard side, by the main lip 102 being slidably brought into close contact with the outer peripheral surface of the sleeve 300 provided in an inner periphery of a torque converter 301 so as to rotate, and prevents the dust from making an intrusion from the outboard side, by the dust lip 103.

In this case, as a typical prior art of this kind of oil seal type sealing apparatus, there has been known such a structure as described in Japanese Unexamined Patent Publication No. 2003-90441.

In this case, at a time of assembling an automatic transmission in Fig. 3, the sleeve 300 of the torque converter 301 is inserted from a left side in Fig. 3 after assembling the sealing apparatus 100 in an inner periphery of the torque converter case 200. In other words, in this case, the sleeve 300 is inserted in a direction opposing to a protruding direction of the dust lip 103. Further, since the torque converter 301 is a comparatively great part, and is assembled in a state of being nearly close to a manual work, a leading end of the torque converter 301 interferes with the dust lip 103 of the sealing apparatus 100 in an inserting process of the sleeve 300, the dust lip 103 generates a partial evagination (inversion) or a breakage, and there is a risk that a dust seal function is deteriorated.

Further, if an angle of incline of the dust lip 103 with respect to an outer peripheral surface of the sleeve 300 is made small, it is possible to make the dust lip 103 hard be inverted. However, in this case, it is necessary to elongate the dust lip 103 for making a gap or a fastening margin with respect to the outer peripheral surface of the sleeve 300 proper. As a result, a leading end greatly protrudes to the outboard side from an end portion 101 a in the outboard side of the base portion 101, and an axial dimension L of the sealing apparatus 100 is increased. Further, since the torque converter 301 stands up from the sleeve 300 at a position which is close to an installed position of the sealing apparatus 100, it is hard to elongate the dust lip 103 due to a constraint of an installation space of the sealing apparatus 100.

### SUMMARY OF THE INVENTION

The present invention is made by taking the points mentioned above into consideration, and a technical object of the present invention is to provide a sealing apparatus in which an inversion of a dust lip is not generated by an interference with a rotating body, even if the rotating body such as a rotating shaft, a sleeve or the like is inserted from a dust lip side.

As a means for effectively solving the technical problem mentioned above, in accordance with a first aspect of the present invention, there is provided a sealing apparatus comprising: a base portion closely fitted and fixed to an inner peripheral surface of a housing; a main lip extending to an inboard side from an inner periphery thereof and slidably brought into close contact with an outer peripheral surface of a rotating body inserted to the housing; and a dust lip positioned in an outboard side of the main lip and provided in an inner periphery of the base portion, wherein a leading end of the dust lip extends in a direction opposing approximately vertically to an outer peripheral surface of the rotating body or toward the inboard side therefrom.

Further, in accordance with a second aspect of the present invention, there is provided a sealing apparatus as recited in the first aspect, wherein the dust lip exists in the inboard side than an end portion in the outboard side of the base portion.

Further, in accordance with a third aspect of the present invention, there is provided a sealing apparatus as recited in the first aspect, wherein a thread generating a thread pump force pushing out a fluid to the inboard side on the basis of a rotation of the rotating body is formed in an inner peripheral surface of the main lip, and projections supporting in a floating manner an inner peripheral portion of the dust lip from an outer peripheral surface of the rotating body are formed in the dust lip at a predetermined interval in a circumferential direction.

In accordance with the sealing apparatus on the basis of the present invention, since the leading end of the dust lip extends in the direction opposing approximately vertically to the outer peripheral surface of the rotating body or toward the inboard side therefrom, that is, is directed to the direction which does not oppose to the insertion of the rotating body from the dust lip side, it is possible to effectively prevent the dust lip from being evaginated or broken in the inserting process of the rotating body.

Further, in the case that the dust lip exists in the inboard side than the end portion in the outboard side of the base portion, the installation space of the sealing apparatus is not increased to the outboard side by the dust lip. Accordingly, the dust lip is useful as a sealing means of the portion the installation space in the outboard side is constrained.

Further, in the case that the inner peripheral portion of the dust lip is structured such as to be supported in the floating manner from the outer peripheral surface of the rotating body by the projection, it is possible to prevent the main lip and the dust lip from being adsorbed to the rotating body on the basis of the negative pressure between the main lip and the dust lip caused by an Archimedean screw pump effect of a screw formed in the main lip.

### BRIEF DESCRIPTION OF THE DRAWINGS

Fig. 1 is a one side cross sectional view showing a preferable embodiment of a sealing apparatus in accordance with the present invention;
Fig. 2 is a one side cross sectional view showing the other preferable embodiment of the sealing apparatus in accordance with the present invention; and
Fig. 3 is a one side cross sectional view showing a conventional sealing apparatus,

### DESCRIPTION OF THE PREFERRED EMBODIMENT

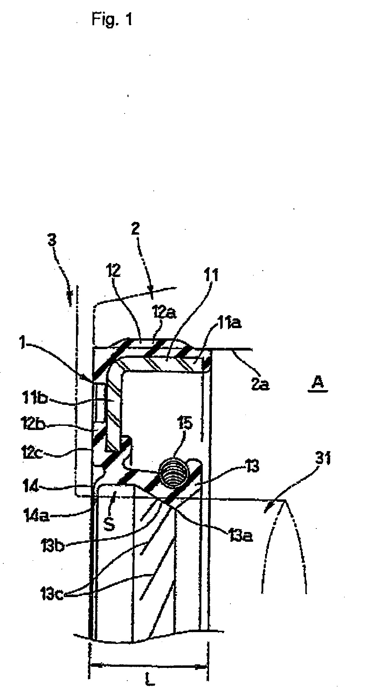

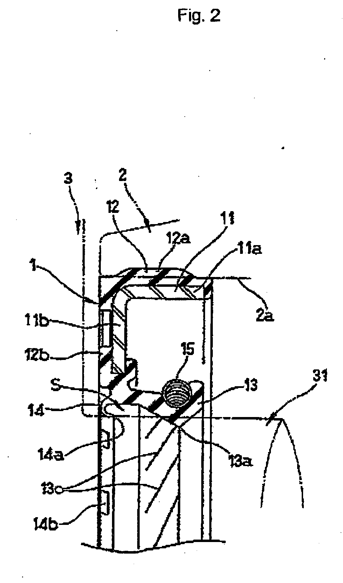

A description will be in detail given below of a sealing apparatus in accordance with the present invention with reference to the accompanying drawings. First, Fig. 1 is a one side cross sectional view showing a preferable embodiment of a sealing apparatus in accordance with the present invention, and Fig. 2 is a one side cross sectional view showing the other embodiment.

A sealing apparatus 1 is of an oil seal type which is integrally formed in a metal ring 11 by a rubber-like elastic material selected by taking into consideration a heat resistance, a cold resistance, an oil resistance, an abrasion resistance or the like, and is provided as a means for sealing between a torque converter case 2 in an automatic transmission of a vehicle and a sleeve 31 in an inner periphery of a torque converter 3. In this case, the torque converter case 2 corresponds to a housing described in claim 1, and the sleeve 31 corresponds to a rotating body described in claim 1.

In detail, the sealing apparatus 1 has the metal ring 11, a base portion 12 in an outer peripheral side, a main lip 13 extending toward an inboard side A from an inner peripheral end of the base portion 12, a dust lip 14 provided in an inner peripheral end of the base portion 12 so as to be positioned in an outboard side of the main lip 13, and an extension spring (also called as a garter spring) 15 fitted and attached to the main lip 13.

The metal ring 11 is formed as a bent shape having an approximately L-shaped cross section constituted by a cylinder portion 11 a, and a flange portion 11 b bent to an inner peripheral side from one end of the cylinder portion 11 a. Further, the base portion 12 bonded to the metal ring 11 is formed as a bent shape having an approximately L-shaped cross section having a tubular seal portion 12a extending in such a manner as to surround an outer peripheral side of the cylinder portion 11a of the metal ring 11, and a diametrical portion 12b extending in such a manner as to surround the flange portion 11 b of the metal ring 11.

The main lip 13 extends to the indoor side A from an inner peripheral end of the diametrical portion 12b of the base portion 12, and is structured such that a seal edge 13a having a chevron cross sectional shape and brought into close contact with an outer peripheral surface of the sleeve 31 of the torque converter 3 at a suitable fastening margin is formed in an inner periphery near a leading end, and a thread (a thread protrusion or a thread groove) 13c generating an Archimedean screw pump force pushing out a peripheral fluid to the inboard side A on the basis of a rotation of the sleeve 31 is formed in an inclined surface (a conical surface) 13b in the outboard side of the seal edge 13a.

In an aspect shown in Fig. 1, an outer peripheral portion of the dust lip 14 extends toward the outboard side from an inner peripheral end of the diametrical portion 12b of the base portion 12, and is bent therefrom at a position which is closer to the main lip 13 side (the inboard side) than the end portion 12c in the outboard side of the base portion 12 while forming a round surface to an inner peripheral side, and a leading end 14a of the dust lip 14 opposes to the outer peripheral surface of the sleeve 31 approximately vertically.

Further, in an aspect shown in Fig. 2, the outer peripheral portion of the dust lip 14 extends toward the outboard side from the inner peripheral end of the diametrical portion 12b of the base portion 12, and is bent therefrom at the position which is closer to the main lip 13 side (the inboard side) than the end portion 12c in the outboard side of the base portion 12 while forming a round surface to the inner peripheral side, and the leading end 14a of the dust lip 14 is directed to the main lip 13 side.

The extension spring 15 is structured by connecting metal coil springs annularly, and is fitted and attached to an annular groove formed in the outer peripheral surface of the intermediate portion 13c in the main lip 13.

In the sealing apparatus 1 structured as mentioned above, since the tubular seal portion 12a of the base portion 12 is pressure inserted, fitted and attached to an inner peripheral surface 2a of a shaft hole portion of the torque converter case 2 such that the main lip 13 is directed to the inboard side A, and the seal edge 13a in the main lip 13 is slidably brought into close contact with the outer peripheral surface of the sleeve 31 of the torque converter 3, the sealing apparatus 1 prevents an oil to be sealed in the inboard side A from leaking from a shaft periphery to the outboard side, and prevents a foreign material in an atmospheric air in the outboard from making an intrusion into the inboard side A by the dust seal 14.

Since the dust seal 14 exists at the position which is closer to the main lip 13 side (the inboard side) than the end portion 12c in the outboard side of the base portion 12, that is, does not protrude to the outboard side than the end portion 12c in the outboard side of the base portion 12, an axial dimension L of the sealing apparatus 1 does not become large. Even in the case that the sealing apparatus 1 is installed to a position which is extremely close to the upstanding position of the torque converter 3, the dust lip 14 does not interfere with the torque converter 3.

At a time of assembling the automatic transmission, the sleeve 31 of the torque converter 3 is inserted from a left side in Fig. 1 or 2, after assembling the sealing apparatus 1 by pressure inserting the tubular seal portion 12a of the base portion 12 to the inner peripheral surface 2a of the shaft hole portion in the torque converter case 2. Further, in the illustrated aspect, since the dust lip 14 is not directed to a direction opposing to the inserting direction of the sleeve 31, a partial evagination (inversion) and a breakage of the dust lip 14 are not generated even if the leading end of the sleeve 31 interferes with the dust lip 14 in an inserting process of the sleeve 31,

In accordance with the structure mentioned above, even if the dust lip 14 is structured such as to have a suitable fastening margin with respect to the outer peripheral surface of the sleeve 31, the dust lip 14 is only deformed to some extent in the inserting direction of the sleeve 31 at a time of inserting the sleeve 31 of the torque converter 3. Accordingly, any problem in an inserting characteristic is not generated.

Further, in the case that the suitable fastening margin with respect to the outer peripheral surface of the sleeve 31 is given to the dust lip 14, if the Archimedean screw pump force is great on the basis of a peripheral speed of the sleeve 31 at a time of rotating, a height, a depth, a number, an angle or the like of the thread 13c formed in the main lip 13, there is a risk of an adsorbing phenomenon of the main lip 13 and the dust lip 14 caused by a negative pressure of the space S between the main lip 13 and the dust lip 14. However, for example, as shown in Fig. 2, the generation of the negative pressure mentioned above can be prevented by forming projections 14b supporting in a floating manner the inner peripheral portion of the dust lip 14 from the outer peripheral surface of the sleeve 31 so as to be spaced at a predetermined interval in a circumferential direction.

## Claims

1. A sealing apparatus comprising: a base portion closely fitted and fixed to an inner peripheral surface of a housing; a main lip extending to an inboard side from an inner periphery thereof and slidably brought into close contact with an outer peripheral surface of a rotating body inserted to the housing; and a dust lip positioned in an outboard side of the main lip and provided in an inner periphery of the base portion, **characterized in that** a leading end of the dust lip extends in a direction opposing approximately vertically to an outer peripheral surface of the rotating body or toward the inboard side therefrom.

2. A sealing apparatus as claimed in claim 1, **characterized in that** the dust lip exists in the inboard side than an end portion in the outboard side of the base portion.

3. A sealing apparatus as claimed in claim 1, **characterized in that** a thread generating a thread pump force pushing out a fluid to the inboard side on the basis of a rotation of the rotating body is formed in an inner peripheral surface of the main lip, and projections supporting in a floating manner an inner peripheral portion of the dust lip from an outer peripheral surface of the rotating body are formed in the dust lip at a predetermined interval in a circumferential direction.
